# FASCICULE DE BREVET EUROPEEN

(11) **EP 4 166 771 B1**
(45) Date de publication et mention de la délivrance du brevet: **21.08.2024**
(21) Numéro de dépôt: 22200998.7
(22) Date de dépôt: 12.10.2022
(51) Int. Cl.: F02C 3/22, F02C 7/224, F02K 1/82, F02C 6/20

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 13.10.2021 FR 2110851
(43) Date de publication de la demande: 19.04.2023
(73) Titulaire: Airbus, 31700 Blagnac (FR); AIRBUS OPERATIONS, 31060 Toulouse Cedex 9 (FR)
(72) Inventeur: CARRETERO BENIGNOS, Jorge Alejandro, 82024 TAUFKIRCHEN (DE); CZAPLA, Lionel, 31060 TOULOUSE (FR)
(74) Mandataire: Cabinet Le Guen Maillet

(56) Documents cités:
- EP-A1- 3 487 764
- EP-A1- 3 623 602
- WO-A1-2014/105327
- US-A1- 2014 298 771

## Description

### DOMAINE TECHNIQUE

La présente invention concerne un ensemble propulsif pour un aéronef, ledit ensemble propulsif comprenant un système de propulsion comportant une tuyère d'éjection assurant l'éjection des gaz de combustion du système de propulsion et un échangeur thermique arrangé au niveau de la tuyère d'éjection pour assurer un transfert de calories vers le carburant du système de propulsion, ainsi qu'un aéronef comportant au moins un tel système de propulsion.

### ÉTAT DE LA TECHNIQUE ANTÉRIEURE

Afin de se déplacer, un aéronef comporte classiquement au moins un ensemble propulsif comprenant un système de propulsion arrangé dans une nacelle et qui peut prendre la forme d'un turboréacteur ou d'un turbopropulseur. Dans chaque cas, le système de propulsion comporte un ensemble rotatif qui entraîne une soufflante ou une hélice. L'ensemble rotatif constitue un noyau du système de propulsion et il comporte de l'avant vers l'arrière une entrée d'air qui permet l'introduction d'air dans une veine du noyau, un compresseur qui comprime l'air ainsi introduit, une chambre de combustion dans laquelle se mélange l'air ainsi comprimé et un carburant, et une turbine qui permet la détente des gaz de combustion et qui génère la rotation qui est transmise à la soufflante ou à l'hélice.

En aval de la turbine, une tuyère d'éjection assure l'éjection des gaz de combustion.

Il est également connu, notamment dans le cas du dihydrogène, que le rendement de la combustion d'un carburant est amélioré si ce carburant est chauffé avant ladite combustion. Il est également connu d'utiliser une partie des gaz de combustion chauds évacués par la tuyère d'éjection pour réchauffer le carburant.

Les documents EP-A-3 623 602, WO-A-2014/105327, US-A-2014/298771 et EP-A-3 487 764 divulguent des ensembles propulsifs de l'état de la technique.

### EXPOSÉ DE L'INVENTION

Un objet de la présente invention est de proposer une autre solution pour réchauffer le carburant avant sa combustion sans prélever les gaz de combustion.

À cet effet, est proposé un ensemble propulsif pour un aéronef comportant :
- une nacelle,
- un système de propulsion arrangé à l'intérieur de la nacelle et comprenant un carénage, un ensemble rotatif comportant une chambre de combustion et logé dans le carénage, une tuyère d'éjection disposée en aval de la chambre de combustion et délimitée par une portion arrière du carénage, dite paroi de tuyère, et assurant l'éjection des gaz de combustion issus de la combustion du carburant dans la chambre de combustion,
- un réservoir de carburant,
- une canalisation d'apport qui relie le réservoir et la chambre de combustion,
- un capotage fixé de manière étanche à la paroi de tuyère et sur l'extérieur de celle-ci, et où le capotage et la paroi de tuyère définissent entre eux une chambre, et
- un système d'échangeur thermique assurant, en fonctionnement du système de propulsion, un échange de calories entre les gaz chauds de combustion circulant dans la tuyère d'éjection et le carburant plus froid circulant dans la canalisation d'apport au moins en partie par rayonnement thermique à travers la paroi de tuyère, où le système d'échangeur thermique comporte une portion de canalisation arrangée dans ladite chambre et où l'échange de calories s'effectue au niveau de cette portion de canalisation,

L'ensemble propulsif étant caractérisé en ce que la paroi de tuyère est percée d'une pluralité d'orifices qui débouchent d'un côté dans la tuyère d'éjection et de l'autre côté dans la chambre.

Avec un tel arrangement, les calories des gaz de combustion sont transférées au carburant pour une meilleure combustion sans prélever de gaz de combustion.

Selon un mode de réalisation particulier, la portion de canalisation du système d'échangeur thermique est une portion de la canalisation d'apport.

Avantageusement, l'ensemble propulsif comporte des moyens de détection de fuite prévus au niveau de ladite portion de canalisation, une unité de contrôle connectée aux moyens de détection de fuite et une vanne montée sur la canalisation d'apport en aval de la portion de canalisation et commandée en ouverture et en fermeture par l'unité de contrôle.

Selon un mode de réalisation particulier, le système d'échangeur thermique comporte une canalisation de circulation dans laquelle circule un fluide caloporteur, une pompe arrangée de manière à mettre en mouvement le fluide caloporteur dans la canalisation de circulation et un échangeur thermique arrangé entre la canalisation d'apport et la canalisation de circulation et ladite portion de canalisation du système d'échangeur thermique est une portion de la canalisation de circulation.

Avantageusement, la portion de canalisation du système d'échangeur thermique comporte au moins une spire qui entoure la paroi de tuyère.

Selon un mode de réalisation particulier, le diamètre des orifices est compris entre 1 mm et 3 mm.

Selon un mode de réalisation particulier, le diamètre des orifices est compris entre 0,4 mm et 1 mm, et la paroi de tuyère est percée d'au moins un orifice amont et d'au moins un orifice aval dont les diamètres sont compris entre 20 mm et 40 mm.

Avantageusement, ladite portion de canalisation du système d'échangeur thermique est constituée d'une seule conduite continue.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique vue de côté et en coupe d'un ensemble propulsif selon un premier mode de réalisation de l'invention,
Fig. 3 est une représentation schématique vue de côté et en coupe d'un ensemble propulsif selon un deuxième mode de réalisation de l'invention, et
Fig. 4 est une représentation schématique vue de côté et en coupe d'une variante de l'ensemble propulsif selon l'invention.

### EXPOSÉ DÉTAILLÉ DE MODES DE RÉALISATION

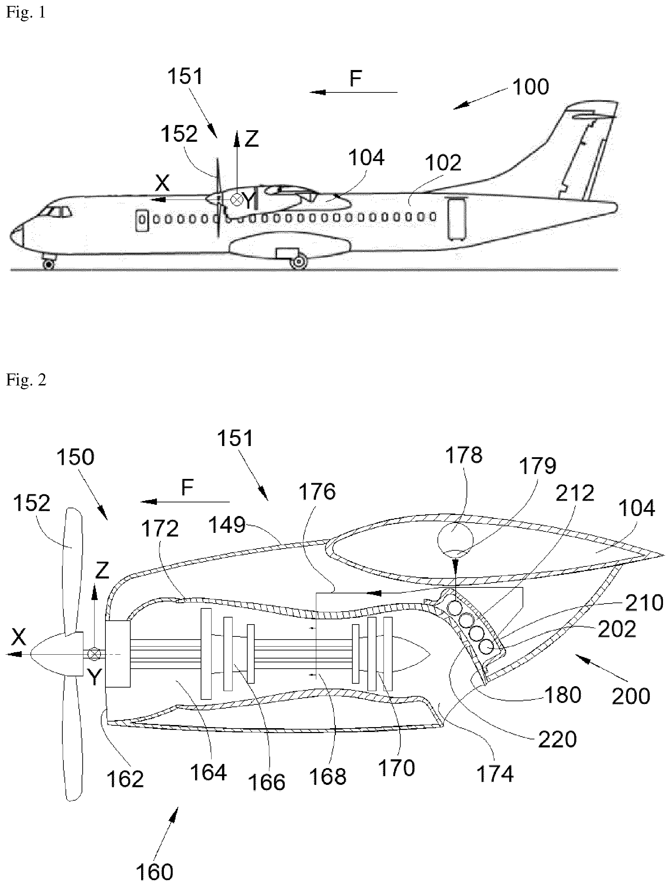

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

La Fig. 1 montre un aéronef 100 qui présente un fuselage 102 de part et d'autre duquel est fixée une aile 104. Sous chaque aile 104 est fixé au moins un ensemble propulsif 151.

La Fig. 2 montre l'ensemble propulsif 151 qui comprend une nacelle 149 et un système de propulsion 150 entouré par la nacelle 149. Dans le mode de réalisation de l'invention présenté ici, le système de propulsion 150 prend la forme d'un turbopropulseur avec une hélice 152 entraînée en rotation par un ensemble rotatif monté à l'intérieur d'un carénage 172 du système de propulsion 150 logé à l'intérieur de la nacelle 149, mais le système de propulsion 150 peut également prendre la forme d'un turboréacteur entraînant une soufflante. Ainsi, d'une manière générale, le système de propulsion 150 comporte un ensemble rotatif et un élément mobile 152 (hélice ou soufflante).

Dans la description qui suit, et par convention, on appelle X l'axe longitudinal qui correspond à l'axe de rotation de l'élément mobile 152 orienté positivement dans le sens d'avancement de l'aéronef 100, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

Les Figs. 2 à 4 montrent le système de propulsion 150 dans le cas d'un turbopropulseur. L'ensemble rotatif 160 constitue un noyau du système de propulsion 150 et comporte de l'avant vers l'arrière, une entrée d'air 162 qui permet l'introduction d'air dans une veine 164 du noyau, un compresseur 166 qui comprime l'air ainsi introduit, une chambre de combustion 168 dans laquelle l'air ainsi comprimé et un carburant se mélangent et brûlent, et une turbine 170 qui permet la détente des gaz de combustion et qui génère la rotation qui est transmise à l'élément mobile, ici l'hélice 152. Les éléments de l'ensemble rotatif 160 sont entourés par le carénage 172 formé de carters structuraux montés autour des éléments de l'ensemble rotatif 160 et permettent de le rigidifier afin notamment de limiter ses distorsions en fonctionnement.

Le carénage 172 est, d'une part, ouvert à l'avant au niveau de l'entrée d'air 162 et délimite la veine 164 et est, d'autre part, ouvert à l'arrière au niveau d'une tuyère d'éjection 174 qui est en aval de la turbine 170 et donc de la chambre de combustion 168 et assure l'éjection des gaz de combustion issus de la combustion du carburant et de l'air dans la chambre de combustion 168. La partie arrière du carénage 172 qui entoure la tuyère d'éjection 174 forme la paroi de tuyère 180.

L'espace entre la nacelle 149 et le carénage 172 est occupé par divers systèmes permettant d'assurer le fonctionnement du système de propulsion 150. En particulier, afin d'alimenter la chambre de combustion 168 en carburant, l'ensemble propulsif 151 comporte un réservoir de carburant 178 qui est ici logé dans l'aile 104, une canalisation d'apport 176 qui relie le réservoir 178 et la chambre de combustion 168 et une pompe 179 qui met en mouvement le carburant du réservoir 178 jusqu'à la chambre de combustion 168 à travers la canalisation d'apport 176. Le carburant peut être par exemple du kérosène ou du dihydrogène (H₂). Sans sortir du cadre de l'invention, le réservoir de carburant 178 peut aussi être logé dans une autre partie de l'aéronef 100, par exemple dans le fuselage 102.

Afin de réchauffer le carburant avant son injection dans la chambre de combustion 168, et ce pour obtenir une meilleure combustion, l'ensemble propulsif 151 comporte également un système d'échangeur thermique 200, 300, 400, qui est arrangé dans l'espace entre la nacelle 149 et le carénage 172, et qui est arrangé, lorsque le système de propulsion 150 est en fonctionnement, pour assurer un échange de calories entre les gaz chauds de combustion circulant dans la tuyère d'éjection 174 et le carburant plus froid circulant dans la canalisation d'apport 176. Ce transfert de calories s'effectue au moins en partie par rayonnement thermique à travers la paroi de tuyère 180 qui est portée à haute température lors du fonctionnement du système de propulsion 150.

L'ensemble propulsif 151 comporte également un capotage 210 qui est fixé de manière étanche à la paroi de tuyère 180 et sur l'extérieur de celle-ci, et où le capotage 210 et la paroi de tuyère 180 définissent entre eux une chambre 212. La fixation du capotage 210 est réalisée par exemple par soudure ou rivetage le long de la périphérie du capotage 210.

Le système d'échangeur thermique 200, 300, 400 comporte une portion de canalisation 202, 308, 402 arrangée dans ladite chambre 212 au niveau de la paroi de tuyère 180 et l'échange de calories s'effectue au niveau de cette portion de canalisation 202, 308, 402.

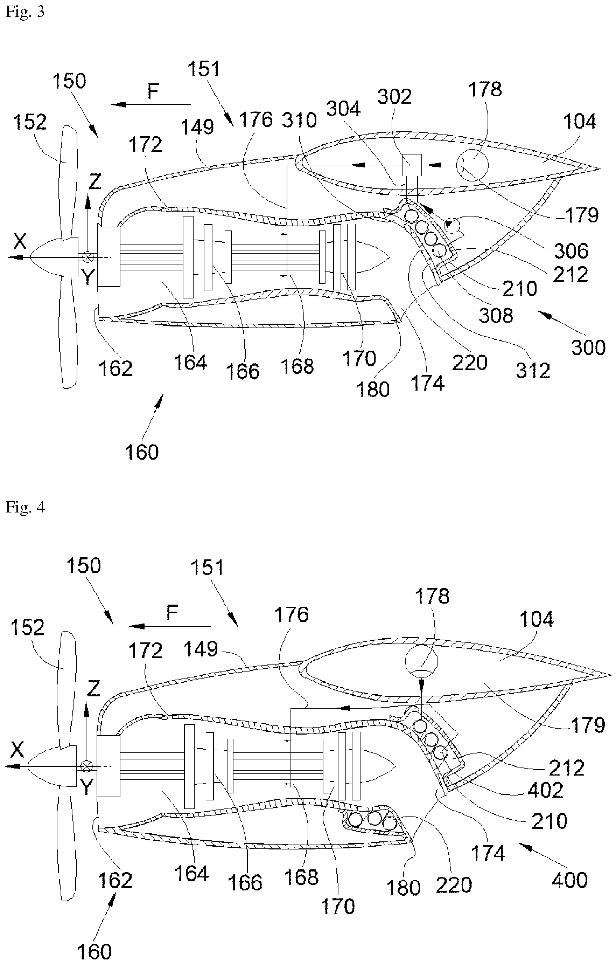

Dans le mode de réalisation de la Fig. 2 et de la Fig. 4, la portion de canalisation 202, 402 du système d'échangeur thermique 200, 400 est une portion de la canalisation d'apport 176 qui traverse une première fois le capotage 210 pour entrer dans la chambre 212 et traverse une deuxième fois le capotage 210 pour sortir de la chambre 212 et rejoindre la chambre de combustion 168.

Ainsi, la portion de canalisation 202, 402 est fixée dans la chambre 212 au niveau de la paroi de tuyère 180 et le réchauffement du carburant s'effectue directement dans la canalisation d'apport 176.

De préférence, pour maximiser le transfert thermique, la portion de canalisation 202, 402 est au contact de la paroi de tuyère 180 ou à proximité de cette dernière, c'est-à-dire à une distance maximale de 50 cm.

Dans le mode de réalisation de la Fig. 2, la portion de canalisation 202 prend la forme d'un serpentin qui chemine sur l'extérieur de la paroi de tuyère 180.

Dans le mode de réalisation de la Fig. 4, la portion de canalisation 402 du système d'échangeur thermique 400 entoure la paroi de tuyère 180 et elle présente ainsi au moins une spire qui entoure la paroi de tuyère 180. Une telle disposition augmente le transfert de calories depuis les gaz de combustion.

Pour prévenir une fuite de carburant au niveau de la portion de canalisation 202, 402, le système d'échangeur thermique 200, 400 comporte des moyens de détection de fuite prévus au niveau de ladite portion de canalisation 202, 402 et une unité de contrôle connectée aux moyens de détection de fuite. Le système d'échangeur thermique 200, 400 comporte également une vanne montée sur la canalisation d'apport 176 en aval de la portion de canalisation 202, 402 par rapport au sens d'écoulement du carburant et commandée en ouverture et en fermeture par l'unité de contrôle. L'unité de contrôle commande la fermeture de la vanne lorsque les moyens de détection de fuite détectent une fuite de carburant au niveau de la portion de canalisation 202, 402.

Dans le mode de réalisation de la Fig. 3, le système d'échangeur thermique 300 comporte une canalisation de circulation 304 dans laquelle circule un fluide caloporteur, une pompe 306 arrangée de manière à mettre en mouvement le fluide caloporteur dans la canalisation de circulation 304, où la portion de canalisation 308 du système d'échangeur thermique 300 est une portion de la canalisation de circulation 304 qui traverse une première fois le capotage 210 pour entrer dans la chambre 212 et traverse une deuxième fois le capotage 210 pour sortir de la chambre 212.

Comme précédemment, la portion de canalisation 308 est par exemple fixée au contact de la paroi de tuyère 180 ou à proximité de cette dernière, c'est-à-dire à une distance maximale de 50 cm, afin d'assurer un transfert de calories des gaz de combustion vers le fluide caloporteur.

Le système d'échangeur thermique 300 comporte également un échangeur thermique 302 arrangé entre la canalisation d'apport 176 et la canalisation de circulation 304 de manière à assurer un transfert de calories du fluide caloporteur vers le carburant. Ainsi, le réchauffement du carburant s'effectue indirectement par l'intermédiaire d'un fluide caloporteur.

Dans le mode de réalisation de la Fig. 3, la portion de canalisation 308 prend par exemple la forme d'un serpentin qui chemine sur l'extérieur de la paroi de tuyère 180. Mais, la portion de canalisation 308 peut également présenter au moins une spire qui entoure la paroi de tuyère 180 reprenant ainsi la variante de la Fig. 4.

Dans le mode de réalisation de la Fig. 4, le capotage 210 prend globalement la forme d'un cylindre fixé autour de la paroi de tuyère 180.

Selon un mode de réalisation particulier de l'invention et dans chacun des modes de réalisation décrits ici, la paroi de tuyère 180 est percée d'une pluralité d'orifices 220 qui débouchent d'un côté dans la tuyère d'éjection 174 et de l'autre côté dans la chambre 212.

Selon un mode de réalisation particulier de l'invention, le diamètre des orifices 220 est compris entre 1 mm et 3 mm. Ces orifices 220 agissent alors comme atténuateur acoustique au niveau de la tuyère d'éjection 174 en utilisant la chambre 212 pour atténuer le bruit et comme passage pour un flux d'air provenant de la tuyère d'éjection 174 et entrant dans la chambre 212 afin d'améliorer le transfert thermique avec la portion de canalisation 202, 308, 402.

Selon un autre mode de réalisation particulier de l'invention, le diamètre des orifices 220 est compris entre 0,4 mm et 1 mm. Ces orifices 220 agissent alors uniquement comme atténuateur acoustique au niveau de la tuyère d'éjection 174 en utilisant la chambre 212 pour atténuer le bruit. Dans ce mode de réalisation qui est plus particulièrement représenté sur la Fig. 3, la paroi de tuyère 180 est percée d'au moins un orifice amont 310 et d'au moins un orifice aval 312 dont les diamètres sont compris entre 20 mm et 40 mm pour assurer la circulation de l'air dans la chambre 212 et améliorer le transfert thermique avec la portion de canalisation 308. Le ou chaque orifice amont 310 est localisé au niveau d'une partie avant du capotage 210 et le ou chaque orifice aval 312 est localisé au niveau d'une partie arrière du capotage 210.

Selon un autre mode de réalisation particulier, les diamètres des orifices 220 sont évolutifs le long de la paroi de tuyère 180 et adaptés aux fréquences à atténuer et évoluent par exemple entre 0,4 mm et 3 mm.

Dans ces différents modes de réalisation, l'atténuation acoustique peut être améliorée par la mise en place de cloisons à l'intérieur de la chambre 212. Ces cloisons s'étendent globalement perpendiculairement à la paroi de tuyère 180 entre ladite paroi de tuyère 180 et le capotage 210. Les cloisons sont fixées par tous moyens appropriés comme le soudage ou le rivetage. Ces cloisons délimitent entre elles des cavités qui débouchent dans la tuyère d'éjection 174 à travers un des orifices 220. Les dimensions de chaque cavité sont adaptées en fonction des fréquences acoustiques à atténuer.

Pour limiter le risque de fuite de la portion de canalisation 202, 308, 402 dans la chambre 212, ladite portion de canalisation 202, 308, 402 du système d'échangeur thermique 200, 300, 400 est constituée d'une seule conduite continue.

Selon un mode d'assemblage particulier, la portion de canalisation 202, 308, 402 est soudée au capotage 210 au niveau où ladite portion de canalisation 202, 308, 402 traverse le capotage 210, c'est-à-dire pour entrer et sortir de la chambre 212. Puis le capotage 210 ainsi équipé de la portion de canalisation 202, 308, 402 est soudé à la paroi de tuyère 180.

Pour limiter les distorsions entre le capotage 210 et la paroi de tuyère 180 sous l'effet de la chaleur, le capotage 210 et la paroi de tuyère 180 sont réalisés dans le même matériau.

Et de la même manière, pour les distorsions entre le capotage 210 et la portion de canalisation 202, 308, 402 sous l'effet de la chaleur, le capotage 210 et la portion de canalisation 202, 308, 402 du système d'échangeur thermique 200, 300, 400 sont réalisés dans le même matériau.

Pour fixer la portion de canalisation 202, 308, 402 dans la chambre 212, il est également possible d'utiliser des moyens de fixation qui assurent la fixation de la portion de canalisation 202, 308, 402 au capotage 210. Pour limiter les contraintes en cas de déformation de la portion de canalisation 202, 308, 402 sous l'effet de la chaleur, les moyens de fixation sont prévus pour permettre une dilatation de la portion de canalisation. Les moyens de fixation sont par exemple une pluralité de colliers, chacun étant fixé au capotage 210 et enserrant la portion de canalisation.

Pour améliorer encore le transfert thermique dans la chambre 212, une couche d'un isolant thermique peut être apposée contre le capotage 210 du côté opposé à ladite chambre 212.

## Revendications

1. Ensemble propulsif (151) pour un aéronef (100) comportant :
- une nacelle (149),
- un système de propulsion (150) arrangé à l'intérieur de la nacelle (149) et comprenant un carénage (172), un ensemble rotatif (160) comportant une chambre de combustion (168) et logé dans le carénage (172), une tuyère d'éjection (174) disposée en aval de la chambre de combustion (168) et délimitée par une portion arrière du carénage (172), dite paroi de tuyère (180), et assurant l'éjection des gaz de combustion issus de la combustion du carburant dans la chambre de combustion (168),
- un réservoir de carburant (178),
- une canalisation d'apport (176) qui relie le réservoir (178) et la chambre de combustion (168),
- un capotage (210) fixé de manière étanche à la paroi de tuyère (180) et sur l'extérieur de celle-ci, et où le capotage (210) et la paroi de tuyère (180) définissent entre eux une chambre (212), et
- un système d'échangeur thermique (200, 300, 400) assurant, en fonctionnement du système de propulsion (150), un échange de calories entre les gaz chauds de combustion circulant dans la tuyère d'éjection (174) et le carburant plus froid circulant dans la canalisation d'apport (176) au moins en partie par rayonnement thermique à travers la paroi de tuyère (180), où le système d'échangeur thermique (200, 300, 400) comporte une portion de canalisation (202, 308, 402) arrangée dans ladite chambre (212) et où l'échange de calories s'effectue au niveau de cette portion de canalisation (202, 308, 402),
l'ensemble propulsif (151) étant **caractérisé en ce que** la paroi de tuyère (180) est percée d'une pluralité d'orifices qui débouchent d'un côté dans la tuyère d'éjection (174) et de l'autre côté dans la chambre (212).

2. Ensemble propulsif (151) selon la revendication 1, **caractérisé en ce que** la portion de canalisation (202, 402) du système d'échangeur thermique (200) est une portion de la canalisation d'apport (176).

3. Ensemble propulsif (151) selon la revendication 2, **caractérisé en ce qu'**il comporte des moyens de détection de fuite prévus au niveau de ladite portion de canalisation (202, 402), une unité de contrôle connectée aux moyens de détection de fuite et une vanne montée sur la canalisation d'apport (176) en aval de la portion de canalisation (202, 402) et commandée en ouverture et en fermeture par l'unité de contrôle.

4. Ensemble propulsif (151) selon la revendication 1, **caractérisé en ce que** le système d'échangeur thermique (300, 400) comporte une canalisation de circulation (304) dans laquelle circule un fluide caloporteur, une pompe (306) arrangée de manière à mettre en mouvement le fluide caloporteur dans la canalisation de circulation (304) et un échangeur thermique (302) arrangé entre la canalisation d'apport (176) et la canalisation de circulation (304) et **en ce que** ladite portion de canalisation (308) du système d'échangeur thermique (300, 400) est une portion (308) de la canalisation de circulation (304).

5. Ensemble propulsif (151) selon l'une des revendications 2 à 4, **caractérisé en ce que** la portion de canalisation (402) du système d'échangeur thermique (400) comporte au moins une spire qui entoure la paroi de tuyère (180).

6. Ensemble propulsif (151) selon l'une des revendications 1 à 5, **caractérisé en ce que** le diamètre des orifices (220) est compris entre 1 mm et 3 mm.

7. Ensemble propulsif (151) selon l'une des revendications 1 à 5, **caractérisé en ce que** le diamètre des orifices (220) est compris entre 0,4 mm et 1 mm, et **en ce que** la paroi de tuyère (180) est percée d'au moins un orifice amont (310) et d'au moins un orifice aval (312) dont les diamètres sont compris entre 20 mm et 40 mm.

8. Ensemble propulsif (151) selon l'une des revendications 1 à 7, **caractérisé en ce que** ladite portion de canalisation (202, 308, 402) du système d'échangeur thermique (200, 300, 400) est constituée d'une seule conduite continue.

9. Aéronef (100) comportant au moins un ensemble propulsif (151) selon l'une des revendications précédentes.

## Patentansprüche

1. Antriebseinheit (151) für ein Luftfahrzeug (100), welche aufweist:
- eine Gondel (149),
- ein Antriebssystem (150), das im Inneren der Gondel (149) angeordnet ist und eine Verkleidung (172), eine rotierende Anordnung (160), die eine Brennkammer (168) aufweist und in der Verkleidung (172) aufgenommen ist, und eine Schubdüse (174) aufweist, die stromabwärts der Brennkammer (168) angeordnet ist und von einem hinteren Abschnitt der Verkleidung (172), Düsenwand (180) genannt, begrenzt wird und den Ausstoß der Verbrennungsgase sicherstellt, die durch die Verbrennung des Kraftstoffs in der Brennkammer (168) entstehen,
- einen Kraftstofftank (178),
- eine Zufuhrleitung (176), die den Tank (178) und die Brennkammer (168) verbindet,
- eine Verkleidung (210), die dicht an der Düsenwand (180) und auf der Außenseite derselben befestigt ist, und wobei die Verkleidung (210) und die Düsenwand (180) zwischen sich eine Kammer (212) definieren, und
- ein Wärmetauschersystem (200, 300, 400), das im Betrieb des Antriebssystems (150) einen Wärmeaustausch zwischen den heißen Verbrennungsgasen, die in der Schubdüse (174) strömen, und dem kälteren Kraftstoff, der in der Zufuhrleitung (176) strömt, wenigstens teilweise durch Wärmestrahlung durch die Düsenwand (180) hindurch sicherstellt, wobei das Wärmetauschersystem (200, 300, 400) einen Leitungsabschnitt (202, 308, 402) aufweist, der in der Kammer (212) angeordnet ist, und wobei der Wärmeaustausch an diesem Leitungsabschnitt (202, 308, 402) erfolgt,
wobei die Antriebseinheit (151) **dadurch gekennzeichnet ist, dass** die Düsenwand (180) von mehreren Öffnungen durchbohrt ist, die auf einer Seite in die Schubdüse (174) und auf der anderen Seite in die Kammer (212) münden.

2. Antriebseinheit (151) nach Anspruch 1, **dadurch gekennzeichnet, dass** der Leitungsabschnitt (202, 402) des Wärmetauschersystems (200) ein Abschnitt der Zufuhrleitung (176) ist.

3. Antriebseinheit (151) nach Anspruch 2, **dadurch gekennzeichnet, dass** sie Leckdetektionsmittel, die an dem Leitungsabschnitt (202, 402) vorgesehen sind, eine Steuereinheit, die mit den Leckdetektionsmitteln verbunden ist, und ein Ventil, das an der Zufuhrleitung (176) stromabwärts des Leitungsabschnitts (202, 402) angebracht ist und durch die Steuereinheit zum Öffnen und Schließen gesteuert wird, aufweist.

4. Antriebseinheit (151) nach Anspruch 1, **dadurch gekennzeichnet, dass** das Wärmetauschersystem (300, 400) eine Zirkulationsleitung (304), in der ein Wärmeträgerfluid zirkuliert, eine Pumpe (306), die so angeordnet ist, dass sie das Wärmeträgerfluid in der Zirkulationsleitung (304) in Bewegung versetzt, und einen Wärmetauscher (302), der zwischen der Zufuhrleitung (176) und der Zirkulationsleitung (304) angeordnet ist, aufweist, und dadurch, dass der Leitungsabschnitt (308) des Wärmetauschersystems (300, 400) ein Abschnitt (308) der Zirkulationsleitung (304) ist.

5. Antriebseinheit (151) nach einem der Ansprüche 2 bis 4, **dadurch gekennzeichnet, dass** der Leitungsabschnitt (402) des Wärmetauschersystems (400) mindestens eine Windung aufweist, welche die Düsenwand (180) umgibt.

6. Antriebseinheit (151) nach einem der Ansprüche 1 bis 5, **dadurch gekennzeichnet, dass** der Durchmesser der Öffnungen (220) zwischen 1 mm und 3 mm beträgt.

7. Antriebseinheit (151) nach einem der Ansprüche 1 bis 5, **dadurch gekennzeichnet, dass** der Durchmesser der Öffnungen (220) zwischen 0,4 m und 1 mm beträgt, und dadurch, dass die Düsenwand (180) von mindestens einer stromaufwärtigen Öffnung (310) und mindestens einer stromabwärtigen Öffnung (312) durchbohrt ist, deren Durchmesser zwischen 20 mm und 40 mm betragen.

8. Antriebseinheit (151) nach einem der Ansprüche 1 bis 7, **dadurch gekennzeichnet, dass** der Leitungsabschnitt (202, 308, 402) des Wärmetauschersystems (200, 300, 400) aus einer einzigen durchgehenden Leitung besteht.

9. Luftfahrzeug (100), welches mindestens eine Antriebseinheit (151) nach einem der vorhergehenden Ansprüche aufweist.

## Claims

1. Propulsion assembly (151) for an aircraft (100), having:
- a nacelle (149),
- a propulsion system (150) arranged inside the nacelle (149) and comprising a fairing (172), a rotary assembly (160) that has a combustion chamber (168) and is housed in the fairing (172), an exhaust nozzle (174) positioned downstream of the combustion chamber (168) and delimited by a rear portion of the fairing (172), referred to as nozzle wall (180), and ensuring the discharge of the combustion gases originating from the combustion of the fuel in the combustion chamber (168),
- a fuel tank (178),
- a supply pipe (176) that connects the tank (178) and the combustion chamber (168),
- a cowling (210) sealingly fastened to the nozzle wall (180) and on the outside thereof, wherein the cowling (210) and the nozzle wall (180) define between them a chamber (212), and
- a heat exchanger system (200, 300, 400) ensuring, during operation of the propulsion system (150), an exchange of heat energy between the hot combustion gases circulating in the exhaust nozzle (174) and the colder fuel circulating in the supply pipe (176) at least in part by thermal radiation through the nozzle wall (180), wherein the heat exchanger system (200, 300, 400) has a pipe portion (202, 308, 402) arranged in said chamber (212) and wherein the exchange of heat energy takes place at this pipe portion (202, 308, 402),
the propulsion assembly (151) being **characterized in that** the nozzle wall (180) has passing through it a plurality of orifices that open on one side into the exhaust nozzle (174) and on the other side into the chamber (212).

2. Propulsion assembly (151) according to Claim 1, **characterized in that** the pipe portion (202, 402) of the heat exchanger system (200) is a portion of the supply pipe (176).

3. Propulsion assembly (151) according to Claim 2, **characterized in that** it has leak detection means provided at said pipe portion (202, 402), a control unit connected to the leak detection means, and a valve mounted on the supply pipe (176) downstream of the pipe portion (202, 402) and made to open and close by the control unit.

4. Propulsion assembly (151) according to Claim 1, **characterized in that** the heat exchanger system (300, 400) has a circulation pipe (304) in which a heat transfer fluid circulates, a pump (306) arranged so as to move the heat transfer fluid in the circulation pipe (304) and a heat exchanger (302) arranged between the supply pipe (176) and the circulation pipe (304) and **in that** said pipe portion (308) of the heat exchanger system (300, 400) is a portion (308) of the circulation pipe (304).

5. Propulsion assembly (151) according to one of Claims 2 to 4, **characterized in that** the pipe portion (402) of the heat exchanger system (400) has at least one turn that surrounds the nozzle wall (180).

6. Propulsion assembly (151) according to one of Claims 1 to 5, **characterized in that** the diameter of the orifices (220) is between 1 mm and 3 mm.

7. Propulsion assembly (151) according to one of the Claims 1 to 5, **characterized in that** the diameter of the orifices (220) is between 0.4 mm and 1 mm, and **in that** the nozzle wall (180) has passing through it at least one upstream orifice (310) and at least one downstream orifice (312) of which the diameters are between 20 mm and 40 mm.

8. Propulsion assembly (151) according to one of Claims 1 to 7, **characterized in that** said pipe portion (202, 308, 402) of the heat exchanger system (200, 300, 400) is constituted of a single continuous duct.

9. Aircraft (100) having at least one propulsion assembly (151) according to one of the preceding claims.
